# EUROPEAN PATENT APPLICATION

(11) **EP 3 629 077 A1**
(43) Date of publication of application: **01.04.2020**
(21) Application number: 19198821.1
(22) Date of filing: 21.09.2019
(51) Int. Cl.: G02C 1/00, G02C 5/00, G02C 1/04, G02C 1/06, G02C 5/18, G02C 1/08

(54) **IMPROVED METHOD FOR MAKING A COMPONENT OF SPECTACLE FRAME**

(30) Priority: 27.09.2018 IT 201800008977
(71) Applicant: Fotomeccanica SRL, 31050 Pederobba (TV) (IT)
(72) Inventor: Bastianon, Maurizio, 31050 Pederobba (TV) (IT)
(74) Representative: Citron, Massimiliano

(57) **Abstract**

A method is described for producing a metal component (10) of a spectacle frame. To increase the stiffness or the decoration, the method has the steps of
- laying a wire (30) along a portion of the outer perimeter (P) of the component (10), and
- fixing, e.g. welding, the wire (30) to said outer perimeter at least at two points (38).

## Description

The invention refers to an improved method for producing a metal component of a frame for eyeglasses, in particular for producing a frame for lens of eyeglasses. The component is the whole frame for eyeglasses or part of such frame as for example a front mask suitable to support one or two lenses and/or a lateral rod that can be articulated to the mask. The invention also refers to a component that can be manufactured with the method.

It is known to produce spectacle frames through chemical etching (or photo-shearing) of a metal sheet. Or a laser beam is used for cutting the sheet.

With the same technologies, decorations are then applied to the frame, such as surface geometrical patterns, in bas-relief as well.

Expanding this state of the art is the main object of the invention.

Another object is to obtain a method for producing an aforesaid metallic component with a decoration.

Another object is to obtain a method for producing an aforesaid component with improved structural strength.

By *frame* it is meant here the support that supports a transparent medium fixed thereto to keep it in a suitable position before the eyes. *Eyeglasses* are the optical instrument consisting of the frame and the associated transparent medium.

A first aspect of the invention concerns a method for producing a metal component of a frame for eyeglasses, with the steps of
- laying a wire along a portion of the component, and
- fixing, e.g. welding, the wire to the component at least at two points.

Preferably, the wire is laid along a portion of the outer perimeter of the component, and the wire is fixed, e.g. welded, to the outer perimeter at least at two points.

The aforementioned wire can have many functions and advantages, e.g. to strengthen or stiffen the component structure, decorate the component structure, and/or dampen the impacts that occur on the external edge of the component (if the wire dents it can be replaced but the structure of the component it is applied to remains intact).

In a first preferred embodiment, the component comprises or consists of a temple rod or bar, wherein the application of the wire is made on an edge or perimeter of the temple rod or bar.

In a second preferred embodiment, the component comprises or consists of a ring to support a lens along the perimeter of the lens, and the method has the steps of
laying the wire along a portion of the outer perimeter of the ring, and
fixing, e.g. welding or gluing, the wire to said outer perimeter at least at two points.

In particular, before laying the wire, a groove is formed along said portion of the outer perimeter (e.g. of the ring), a groove which serves as a seat for the wire and in which the wire is laid. In this way the wire adheres more firmly to the component and is more difficult to detach. In a more preferred embodiment, the groove seat for the wire has a depth such as to leave the wire protruding from the groove. In this way the wire protrudes from the external edge of the component and protects it better.

In particular, the ring has an inner edge that surrounds a pass-through opening, seat of or for a lens. Preferably a second groove is made on said inner edge, opposite to the one where the wire is placed; this second groove serves as a seat for the lens.

Said ring can be closed or opened.

A closed ring is a metal ring without interruptions in his perimeter, while an open ring has at least one interruption in the perimeter, such as for instance a C or a U, and therefore has at least two free ends.

In a preferred embodiment, in the case of an open ring, said at least two points are made at the - or at least at - two free ends.

In a more preferred embodiment, in correspondence with the - or of at least - two free ends of the ring a clamping element is fixed able to tighten the ring around the lens. Preferably, the clamping element comprises or consists of two approachable threaded tubes which can approach each other by rotating a screw that connects them.

In a preferred embodiment, the wire is a metal wire or a diamond wire.

In a preferred embodiment, the welding step takes place by laser welding, TIG or material fusion.

In a preferred embodiment the wire is placed inside a furrow on the outer perimeter (or edge) of the frame, and preferably the wire is welded at two points.

A second aspect of the invention concerns an object obtained through the method, of which it shares the advantages and the variants described herein. In particular the object is a pair of metallic eyeglasses or metal component of a pair of glasses (e.g. a frame, a front mask or a temple rod).

The metal frame component for eyeglasses comprises
a wire laid and fixed, e.g. welded or glued, to a portion of outer perimeter of the component.

The outer perimeter is defined as the edge of the component that is diametrically opposite the lens.

In a preferred embodiment, the component comprises or consists of a ring to support a lens along the perimeter of the lens.

In particular, the ring comprises a groove, which acts as a seat for the wire.

In a more preferred embodiment, the groove for the wire has a depth such as to leave the wire protruding from the groove.

In particular, the ring has an inner edge that surrounds a pass-through opening seat for a lens, and comprises a second groove on said inner edge, opposite to the one where the wire is placed.

This ring can be closed or opened.

In a preferred embodiment, in the case of an open ring said at least two points are located at the - or at least at - two free ends.

In a more preferred embodiment, in correspondence with the - or with at least - two free ends of the ring, the ring comprises a clamping element able to tighten the ring around the lens. Preferably, the clamping element comprises or consists of two threaded tubes that can approach each other by turning a screw that connects them.

In a preferred embodiment, the frame comprises a furrow on its outer perimeter (or edge) and the wire is placed inside the furrow, preferably the wire being welded at two points.

A third aspect of the invention concerns the use of a wire laid and fixed, e.g. welded, to a portion of the outer perimeter of a pair of metallic eyeglasses or a metallic component of eyeglasses (e.g. a frame, a front mask or a side rod). This third aspect shares advantages and variants described for the method.

The term *furrow* here indicates a depression or a channel present on the perimeter of the frame. The depression or channel is defined by a bottom and two side walls, the wire being placed between the two side walls.

Preferably the furrow is formed on the edge of the frame which is diametrically opposite the lens. In particular, the furrow is formed on the edge of the frame which is diametrically opposite to the edge on which said second groove is formed

The advantages of the invention will be clearer from the following description of a preferred embodiment of a frame for eyeglasses, making reference to the enclosed drawing in which
- Fig. 1: shows a front view of a pair of eyeglasses;
- Fig. 2: shows a cross-section according to the plane II-II in fig. 1;
- Fig. 3: shows a front view of a second component of eyeglasses.

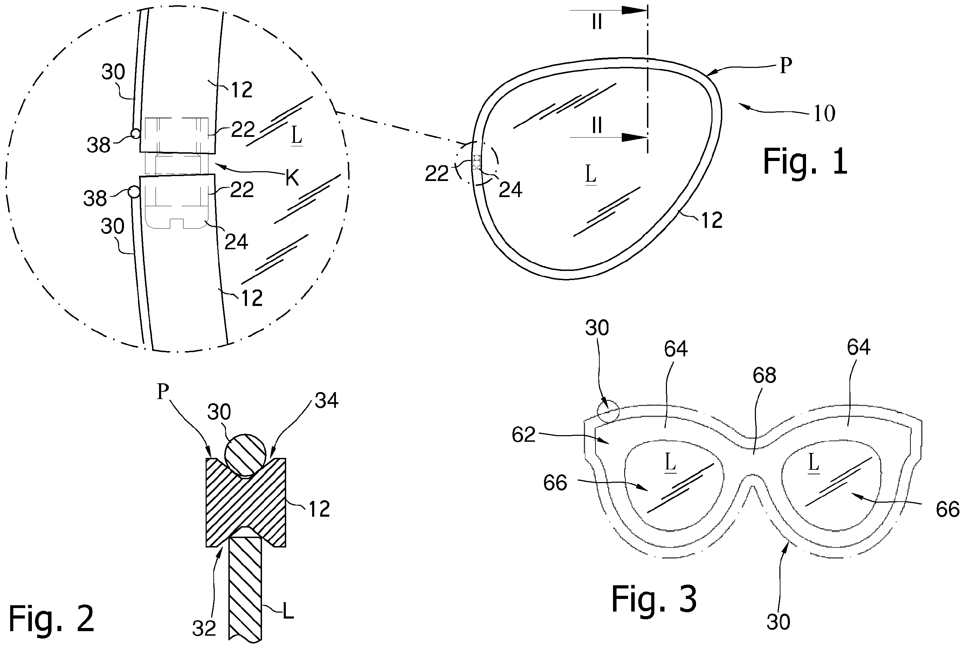

The processing method is able to produce a component 10 as visible in fig. 1. It is a metal ring 12 capable of supporting at the center a lens L.

For this purpose the outer perimeter of the ring 12 (fig. 2) is furrowed by a groove 32 to receive the edge of the lens L. As an optional step of the method the groove 32 is obtained by internally milling the ring 12 or a bar from which it is obtained then by bending.

The groove 32 is e.g. a flared channel and/or
- in cross-section forms an angle towards the outside ranging from 90 to 120 degrees, preferably 105 degrees; and/or
- has a maximum depth of 0.3 to 1 mm, preferably 0.5 mm.

The processing method is able to equip the component 10 with a wire 30 arranged along its outer perimeter P.

For this purpose the outer perimeter P (fig. 2) has a groove 34 for receiving snugly all or part of the wire 30. As an optional step of the method the groove 34 is obtained by milling externally the perimeter P or a rod from which the ring 12 is then obtained by bending.

The groove 34 is e.g. a flared channel and/or
- in cross-section forms an angle towards the outside ranging from 90 to 120 degrees, preferably 105 degrees, and/or
- has a maximum width of 1 to 2 mm, preferably 1.5 mm; and/or
- has a maximum depth of 1 to 2 mm, preferably 1 mm.

The wire 30 is laid inside the groove 34 and then fixed to the ring 12 at least at two points. E.g. the wire 30 is fixed by welding.

The wire 30 can be single and cover alone the whole perimeter P, completely surrounding the ring 12, in which case the wire 20 is preferably fixed to the ring 12 at two its ends which touch or almost touch (fig. 2). Or the perimeter P is partially surrounded by a single wire 30, or the whole perimeter P is surrounded by wire but by two or more wires 30 arranged in tandem series.

Also the ring 12 can have more than one structure. It can be closed, i.e. for example a circle or an oval or an ellipse without interruptions. Otherwise, a particular case of ring 12 is visible in fig. 1, see also the zoomed view.

The ring 12 is interrupted at a point K, so as to be slightly widened to facilitate the assembly of the lens L. To tighten the lens L two threaded tubes 22 are fixed, e.g. by welding, on the free and facing ends of the ring 12, and with a screw 24, which can be screwed into the tubes 22, the ends of the ring 12 are brought together to reduce the section of the ring 12 and tighten the lens L inside the groove 32.

The ends of the wire 30 are preferably fixed in correspondence of the small tubes 22, for ease of construction and to hide the fixing points. In fig. 2 two welding points 38 are shown as an example.

The ring 12 can also be obtained by bending an extruded bar having cross-section visible in fig. 2.

Fig. 3 shows in plan view a second component of eyeglasses that can be produced with the method. It is a front-piece of eyeglasses, consisting of a single-piece metal flat mask 62 formed by two rings 64 connected by a bridge 68. Each ring 64 has a pass-through opening 66 in which to place a respective lens L. On the perimeter PP of the mask 62 the wire 30 is fixed, shown for sake of simplicity when detached and with dashed lines.

The mask 62 can be produced e.g. by shearing from a sheet, by chemical etching or other.

The groove 34 is then made on the mask 62 as described for the component 10, and the wire 30 is laid in the same way.

The lens L can be fixed to the mask 62 e.g. with adhesive, screws or interlocking.

## Claims

1. Method for producing a metal component (10) of a spectacle frame, with the steps of
- laying a wire (30) along a portion of the outer perimeter (P) of the component (10), and
- fixing, e.g. welding, the wire (30) to said outer perimeter at least at two points (38).

2. Method according to claim 1, wherein the component comprises or consists of a temple rod or bar.

3. Method according to claim 1, wherein the component comprises or consists of a ring (12) for supporting a lens (L) along the perimeter of the lens, and the method has the steps of
- laying the wire along a portion of the outer perimeter (P) of the ring (12), and
- fixing, e.g. welding, the wire to said outer perimeter at least at two points.

4. Method according to claim 1 or 2 or 3, wherein, prior to laying the wire, a groove (34) is formed along said portion of the outer perimeter, the groove acting as a seat for the wire and in which the wire is laid.

5. Method according to claim 3 or 4, wherein the ring (12) has an inner edge surrounding a pass-through opening (66), seat of or for a lens (L), and a second groove is formed (32) on said inner edge, opposite to that where the wire is laid; as a seat for the lens (L).

6. Method according to claim 3 or 4 or 5, wherein the ring (12) comprises at least one gap (K) in the perimeter and therefore at least two free ends, said at least two points (38) being made at the - or at least at - two free ends.

7. Method according to any one of the preceding claims, wherein the wire (30) is a metal wire or a diamond wire.

8. Metallic component (10) of a spectacle frame, comprising:
a wire (30) laid and fixed, e.g. welded, to a portion of outer perimeter (P) of the component itself.

9. Component (10) according to claim 8, comprising or consisting of a ring (12) for supporting a lens along the perimeter of the lens, the ring comprising a groove (34) which acts as a seat for the wire.

10. Use of a wire (30) laid and fixed, e.g. welded, to a portion of outer perimeter (P) of metallic spectacles or of metallic component (10) of spectacles.
